# EUROPÄISCHE PATENTSCHRIFT

(11) **EP 3 081 127 B1**
(45) Veröffentlichungstag und Bekanntmachung des Hinweises auf die Patenterteilung: **13.06.2018**
(21) Anmeldenummer: 16164621.1
(22) Anmeldetag: 11.04.2016
(51) Int. Cl.: A47J 43/06, A47J 43/07

(54) **VORRICHTUNG ZUM ZERKLEINERN VON LEBENSMITTELN**
DEVICE FOR CHOPPING FOOD
DISPOSITIF DE BROYAGE D'ALIMENTS

(30) Priorität: 16.04.2015 DE 102015206934
(43) Veröffentlichungstag der Anmeldung: 19.10.2016
(73) Patentinhaber: BSH Hausgeräte GmbH, 81739 München (DE)
(72) Erfinder: Zilnik, Marko, 1218 Komenda (SI); Uplaznik, Marko, 3312 Prebold (SI); Koscak, Ales, 6230 Postojna (SI); Peduto, Marco, 81667 München (DE)

(56) Entgegenhaltungen:
- AU-A1- 2012 216 668
- CN-U- 203 168 809
- CN-Y- 201 404 117
- DE-A1- 10 001 455

## Beschreibung

### Hintergrund der Erfindung

Die Erfindung betrifft eine Vorrichtung zum Zerkleinern von Lebensmitteln, insbesondere zur wählbaren Körnigkeit von verarbeiteten Nahrungsmitteln wie speziell Nüssen und Eis. Mit einem Behälter, einem im Behälter angeordneten rotierenden Messer und einem Durchlass, um die zerkleinerten Lebensmittel passieren zu lassen. Gemäß dem Oberbegriff des Patentanspruchs 1.

### Stand der Technik

Eine Vorrichtung dieser Gattung ist beispielsweise aus der Deutschen Offenlegungsschrift DE 10001455 A1 bekannt. Die dort gezeigte Vorrichtung zum Zerkleinern von Lebensmitteln, insbesondere Eiswürfeln, weist einen Behälterkörper auf, der in einen oberen Bearbeitungsbereich und in einen unteren Sammelbereich unterteilt ist. Das im Bearbeitungsbereich rotierende Zerkleinerungswerkzeug dient zum Zerkleinern der Nahrungsmittel. Am Übergang vom Bearbeitungsbereich zum Sammelbereich ist ein Sieb ausgebildet. Der Zweck dieser Vorrichtung ist es, dass damit Lebensmittel und auch Eiswürfel leicht in definierte Größen zerkleinert werden können. Am Sieb dieser Anordnung ist ein Lagerbolzen zur axialen Lagerung des als Messer ausgebildeten Zerkleinerungswerkzeuges angebracht.

### Das der Ereindung zugrunde liegende Problem

Der Erfindung liegt die Aufgabe zugrunde eine verbesserte Vorrichtung zum Zerkleinern von Lebensmitteln anzugeben.

Bei derartigen Vorrichtungen zur Zerkleinerung von Lebensmitteln ist es wünschenswert einen Zerkleinerungsgrad voreinstellen zu können und dass eine vorgewählte Zerkleinerungsgröße der verarbeiteten Lebensmittel möglichst konstant im Betrieb eingehalten wird. Bei der Vorrichtung im Stand der Technik ist die Zerkleinerungsgröße lediglich durch ein freidrehbares Sieb einstellbar. Ferner bedient die mangelnde strukturelle Integrität eines Siebes, auf Grund der zahlreich vorhandenen Öffnungen, eine gewisse Flexibilität, welche sich auf die Lagerung des rotierenden Messers auswirkt und somit eine gewisse Variabilität in der Größe des Zerkleinerungsgutes zur Folge hat.

Der vorliegenden Erfindung liegt demnach insbesondere die Aufgabe zugrunde eine verbesserte Vorrichtung zur Zerkleinerung von Lebensmitteln anzugeben, welche die Nachteile des Standes der Technik überwindet.

### Erfindungsgemäße Lösung

Zur Lösung der Aufgabe lehrt die vorliegende Erfindung eine Vorrichtung zum Zerkleinern von Nahrungsmitteln gemäß den Merkmalen des Patentanspruches 1.

Erfindungsgemäß ist das Lager mit einer separaten Halterung am Behälter gestützt. Damit wird erreicht, dass die Lagerung des rotierenden Messers unabhängig von der strukturellen Integrität eines Siebes ist. Eine Verformung des Siebes beim Zerkleinerungsvorgang hat damit keine Auswirkung auf die Qualität des Antriebes und der Lagerung.

### Aufbau und Weiterleitung der erfindungsgemäßen Lösung

Vorteilhafte Aus- und Weiterbildungen, welche einzeln oder in Kombination miteinander eingesetzt werden können, sind Gegenstand der abhängigen Ansprüche.

Die erfindungsgemäße Halterung für das Lager kann so ausgestaltet sein, dass das Lager unterhalb des Einsatzes angeordnet ist. Dadurch wird erreicht, dass eine größere Fläche zum Durchlass von zerkleinerten Lebensmitteln bei der Bearbeitung frei bleibt.

Durch die Ausgestaltung der Halterung des Lagers als Ring kann eine optimale Abstützung am Behälter mit geringem Materialaufwand erreicht werden. Dies kann eine größere strukturelle Integrität und sicherere Abstützung des rotierenden Messers bei der Lebensmittelzerkleinerung gewährleisten. Ferner können auf diese Weise Halterungen einfach ausgetauscht werden, falls sie verschlissen sind. Ein Ring kann großflächig am Behälterrand aufliegen und ist einfach herzustellen.

Durch eine Auflagerung des Halteringes an einer Durchmesseränderung, das heißt Verjüngung, des Behälters wird eine einfache technische Lösung zur Verfügung gestellt, die es ermöglicht, dass der Behälter ohne Haltemittel gefertigt werden kann und somit auch für andere Lebensmittelverarbeitungsvorgänge Verwendung finden kann.

Vorteilhafterweise kann der Einsatz der erfindungsgemäßen Vorrichtung zwei gegeneinander bewegliche Elemente aufweisen, die jeweils mindestens ein Loch enthalten, deren Lage so angeordnet ist, dass sie bei geeigneter Positionierung den Durchlass bilden. Auf diese Art und Weise kann durch eine Bewegung der beiden Elemente gegeneinander eine Einstellung der Durchlassgröße technisch einfach realisiert werden.

Vorzugsweise sind die Löcher in den Elementen des Einsatzes unregelmäßig strukturiert. Auf diese Weise wird erreichbar, dass sich durch eine kleinere Bewegung der zwei Elemente gegeneinander, ein weiterer Verstellbereich für die Korngröße des zerkleinerten Lebensmittels einstellen lässt. Unregelmäßig bedeutet insbesondere, dass die Öffnungen in den gegeneinander beweglichen Elementen nicht deckungsgleich übereinander zu liegen kommen, wenn sie gegeneinander verschoben werden. Sind beispielsweise beide Elemente identisch, so sind die Öffnungen insbesondere so positioniert, dass wenn eines der Elemente gewendet wird, die Öffnungen gegeneinander versetzt sind, wenn die Elemente aufeinander zu liegen kommen. Unregelmäßig in diesem Sinne kann ferner bedeuten, dass der Rand einer Öffnung eine Kontur in Form eines Profils aufweist. Zum Beispiel kann der Rand eine Wellenform haben. Insbesondere ist die Wellenform so positioniert, dass beim Wenden eines Elementes und Übereinanderlegen von zwei Elementen ein Wellenberg des einen Elementes in einem Wellental des anderen Elements zu liegen kommt. Durch verschieben der Elemente gegeneinander wandern dann Wellenberg und Wellental auseinander und geben einen einstellbaren Durchlass dazwischen frei. Der Rand einer Öffnung kann ferner zum Beispiel halbkreisförmige Vorsprünge oder Einbuchtungen aufweisen. Ach könnten die Öffnungen beispielsweise dreieckig ausgeführt sein. Durch eine geeignete Formgebung der Löcher kann auf relativ kurzem Verstellweg ein große Größenänderung eingestellt werden, oder auf einem vergleichsweise langen Verstellweg ein kleinere Größenänderung eingestellt werden. Mit der Lochform lässt sich also die Feinheit der Verstellung in Abhängigkeit des Stellweges beeinflussen.

Vorteilhaft ist bei einer Weiterbildung des Einsatzes mit bewegbaren Elementen, welche mindestens ein Loch mit unregelmäßiger Struktur aufweisen, die Struktur im ersten Element spiegelsymetrisch zur Struktur im zweiten Element. Auf diese Art und Weise wird bei der Herstellung des Einsatzes, für sie lediglich ein Stanzwerkzeug benötigt, welches bei dem ersten Element von einer Seite zum Einsatz kommt und beim zweiten Element von der anderen Seite zum Einsatz kommt.

Bevorzugt ist bei einer Weiterbildung der erfindungsgemäßen Vorrichtung der Einsatz als Sieb ausgestaltet. Sieb in diesem Sinne soll hier bedeuten, dass mehrere Löcher im Einsatz vorhanden sind. Bevorzugt weisen beide Elemente mehrerer Löcher auf, weil auf diese Art ein größtmöglicher Durchlass für zerkleinerte Lebensmittel geschaffen wird und damit die Zeitdauer für die Verarbeitung des Lebensmittels verringert wird.

Bei einer bevorzugten Weiterbildung der erfindungsgemäßen Vorrichtung weist der Einsatz eine zentrale Öffnung für das Lager auf. Eine derartige Anbringung ist optimal für ein rotierendes Messer und erlaubt es einfach einen axialen Lagerbolzen zur Halterung des rotierenden Messers unterhalb des Einsatzes anzubringen, um eine Fixierung des Lagers unabhängig vom Einsatz zu erreichen und eine Belastung des Einsatzes beim Zerkleinerungsvorgang zu verringern.

Bevorzugt ist bei einer Weiterbildung der erfindungsgemäßen Vorrichtung in der Mitte der Einsatz mit korrespondierenden lösbaren Eingriffsmitteln ausgestattet, welche die Elemente insbesondere beim Zerkleinerungsvorgang gegen ungewolltes verdrehen gegeneinander sichern, um eine Verstellung der Korngröße während der Lebensmittelverarbeitung zuverlässig zu verhindern.

### Kurzbeschreibung der Zeichnungen

Die Erfindung wird im folgenden anhand schematischer Zeichnungen und mithilfe von Ausführungsbeispielen weiter erläutert. Es zeigen:
- Figur 1: eine schematische Explosionsansicht eines Ausführungsbeispiels einer erfindungsgemäßen Vorrichtung;
- Figur 2: einen Querschnitt durch das in Figur 1 gezeigte Ausführungsbeispiel;
- Figur 3: ein inneres Sieb in einer Ausgangslage in der Draufsicht;
- Figur 4: ein inneres Sieb in der Ausgangslage in schräger Aufsicht;
- Figur 5: ein Teil des inneren Siebes in einer Ausgangslage;
- Figur 6: ein verdrehtes inneres Sieb in der Draufsicht;
- Figur 7: ein verdrehtes inneres Sieb in der Schrägansicht;
- Figur 8: ein verdrehtes inneres Sieb in einer Teilansicht;
- Figur 9: zwei Elemente eines Einsatzes mit strukturierter Öffnung; und
- Figur 10: eine Draufsicht auf zwei übereinander angeordnete Elemente des Einsatzes.

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

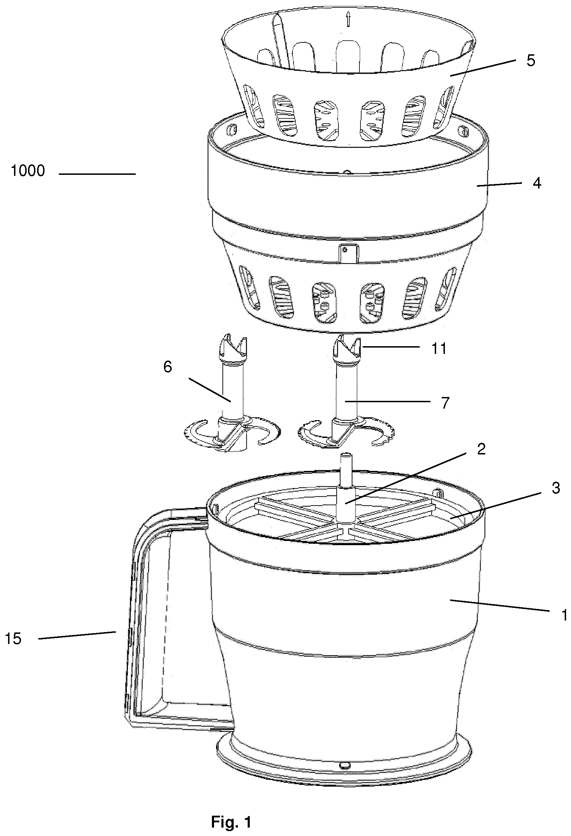

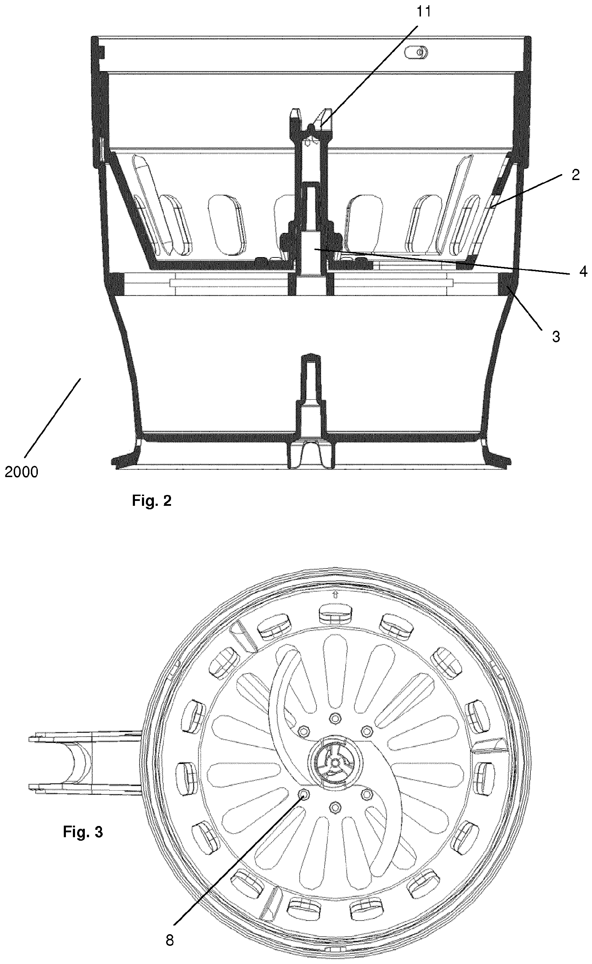

Wie Figur 1 zeigt, hat ein in Explosionsansicht dargestelltes erstes Ausführungsbeispiel 1000 einer erfindungsgemäßen Vorrichtung einen aus zwei Teilen bestehenden Einsatz mit einem inneren Sieb 5 als erstem Element und einem äußerem Sieb 4 als zweitem Element. Im hier gezeigten Ausführungsbeispiel weisen beide Elemente gleichartige Öffnungen von ähnlichen Abmessungen auf. Zur Zerkleinerung von Lebensmitteln können rotierende Messer in Einsatz angebracht werden, von denen beispielsweise eines speziell für die Zerkleinerung von Nahrungsmitteln 6 und ein anderes 7 zur Zerkleinerung von Eis ausgestaltet ist. Für die Messer 6, 7 ist eine Lagerung 2 dargestellt, die in diesem Ausführungsbeispiel als Axiallager, beziehungsweise Lagerstift ausgestaltet ist. Mittels einer Halterung 3 ist das Lager am Behälter 1 gestützt. Vorzugsweise geschieht dies in einer Verjüngerung des Behälters, was noch klarer aus Figur 2 ersichtlich ist. Vorzugsweise durchdringt der, unterhalb des inneren 5 und äußeren 4 Siebes angebrachte, Lagerstift 2 diese in einem zentralen Bereich. So kann nach dem Zusammenbau das erforderliche Messer 6 oder 7 aufgesteckt werden und eine Ankopplung an einen Antrieb einer Küchenmaschine von oben an eine Kupplung F des Messers vorgenommen werden, um dieses in Rotation versetzen zu können. Mittels eines am Behälter angebrachten Griffes 15 kann während des Zerkleinerungsvorgangs dieser zusätzlich abgesichert werden.

Wie Figur 2 in einer Schnittansicht des Ausführungsbeispiels aus Figur 1 zeigt, liegt eine Halterung 3, die hier als Ring ausgeführt ist, in der Schnittansicht 2000 auf einer Verjüngung des Behälters auf. Durch eine derartige Ausgestaltung des Behälters und der Halterung kann erreicht werden, dass die Vorrichtung leicht montierbar und leicht zu reinigen ist, weil sie größtenteils glattflächig ausgestaltet ist. Durch eine Lagerung des Messers unterhalb des Einsatzes wird erreicht, dass das Messer beim Zerkleinerungsvorgang keinen Druck auf das Sieb ausübt und somit das Sieb einem geringeren Verschleiß unterliegt und damit länger hält. Die erfindungsgemäße Vorrichtung lässt sich auch ohne Einschränkung bei einem kontinuierlichen Zerkleinerungsvorgang einsetzen, sofern kein geschlossener Behälter, sondern ein Behälter mit Ausgangsröhre, zur Abgabe des zerkleinerten Lebensmittels ausgestattet ist. Bei der Halterung des Lagers ist man nicht, wie in diesem Ausführungsbeispiel gezeigt, auf die Seitenwände des Behälters beschränkt, sondern kann beliebig geeignete Stützmittel verwenden. Vorteilhaft werden die bei dem Zerkleinerungsvorgang auftretenden Kräfte über den Lagerstift 2 auf Halterung 3 übertragen. Diese Halterung kann beispielsweise sternförmig zur Rotationsachse hin erfolgen. Da somit die Halterung dem erhöhten Verschleiß unterliegt, kann diese einfach ausgetauscht werden und das wesentlich aufwendiger herzustellende Sieb hält länger.

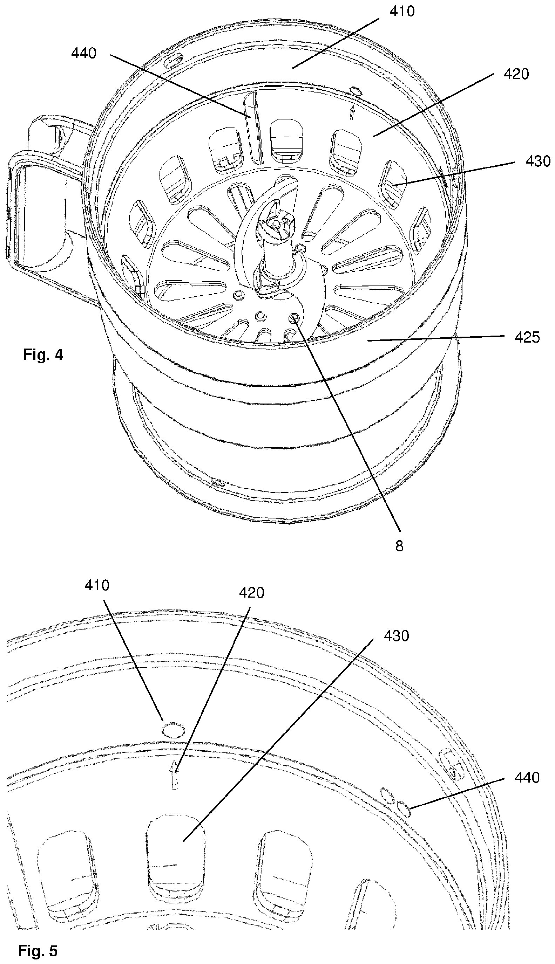

Wie die Figuren 3 bis 5 weiter in unterschiedlichen Ansichten zeigen, weisen die Elemente des Einsatzes vier regelmäßig angeordnete, sich parallel zur Rotationsachse des Messers länglich erstreckende, abgerundete Rechtecke auf, die in einer Ausgangsposition der zwei gegeneinander relativ beweglichen Elemente, die in Figur 1 als Innensieb 5 und als Außensieb 4 bezeichnet dargestellt sind. Am Boden des Einsatzes sind Ansätze 8 gezeigt, die an einem ersten Element angebracht sind und mit Bohrungen am zweiten Element fluchten. Auf diese Weise kann durch Anheben eines Elementes und Verdrehen des angehobenen Elementes eine Relativbewegung der zwei Elemente gegeneinander ausgeübt werden und somit eine Durchlassgröße durch Verdrehen der länglichen Öffnungen gegeneinander eingestellt werden. Beispielsweise sind am Innenring des Innensiebes Markierungen 410 und 440 angebracht, die über einen Pfeil 24 zu liegen kommen. Die Markierung 410 entspricht hier einer größtmöglichen Öffnung mit Breite 450 und die Markierung 440 entspricht einer verkleinerten Öffnung. Der innere Einsatz kann beispielsweise am Rand 425 angehoben werden, ohne das Messer zu entfernen und verdreht werden, um eine Durchlassgröße vorzuwählen und somit eine Größe für die Zerkleinerung des Lebensmittels festzulegen. Durch Anheben des inneren Siebes beziehungsweise Absenken des äußeren Siebes kann erreicht werden, dass die Eingriffsmittel, welche hier als Ansätze dargestellt sind, die in Löcher eingreifen, aus dem Eingriff kommen und eine Rotation der zwei Elemente gegeneinander wird möglich. Durch nachfolgendes Absetzen werden die beiden Elemente des Einsatzes wieder gegeneinander verrastet, womit zuverlässig eine Verdrehung der zwei Einsatzelemente gegeneinander während des Zerkleinerungsbetriebes verhindert wird.

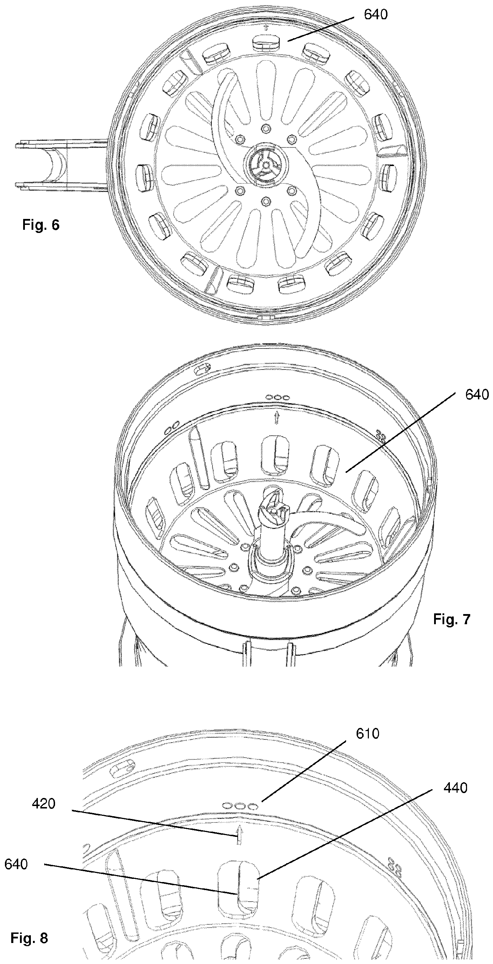

Wie die Figuren 6 bis 8 in korrespondierenden Ansichten zu den Figuren 3 bis 5 zeigen, sind die beiden Elemente des Einsatzes gegeneinander verdreht. Dadurch entstehen kleinere Durchlassöffnungen 640, wie sie im Vergleich Figur 8 dargestellt sind, wobei 440 die größte Öffnungsbreite angibt und 640 die aktuell eingestellte Öffnungsbreite markiert. Ebenso ist zu sehen, dass über dem Pfeil 420 die gewählte Einstellgröße für das Zerkleinerungsgut übersichtlich abgelesen werden kann.

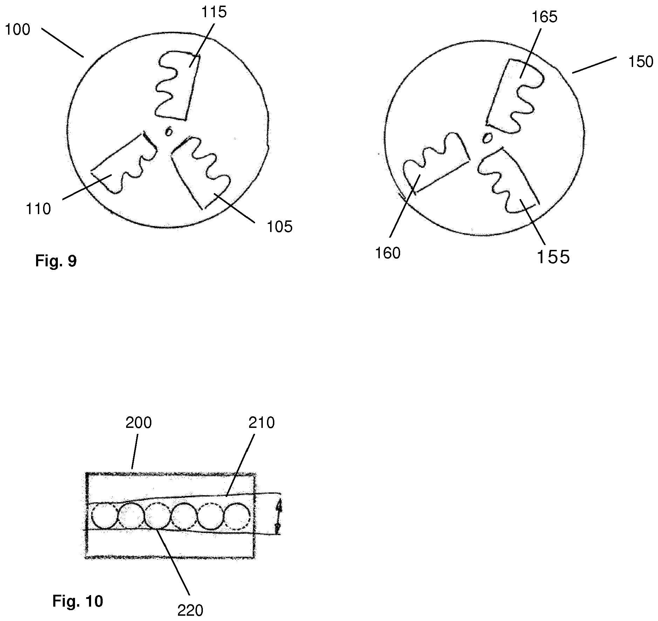

Wie Figur 9 zeigt, kann eine erfindungsgemäße Vorrichtung auch einen Einsatz mit zwei planaren Elementen aufweisen, die unregelmäßig strukturierte Öffnungen enthalten. Unregelmäßig in diesem Sinne kann beispielsweise bedeuten, dass der Rand einer Öffnung eine Kontur in Form eines Profils aufweist. Die Öffnung oder das Loch ist also beispielsweise nicht symmetrisch ausgebildet. Der Rand einer Öffnung kann zum Beispiel halbkreisförmige Vorsprünge oder Einbuchtungen aufweisen. Ach könnten die Öffnungen beispielsweise dreieckig ausgeführt sein. Durch eine geeignete Formgebung der Löcher kann auf relativ kurzem Verstellweg ein große Größenänderung eingestellt werden, oder auf einem relativ langem Verstellweg ein kleinere Größenänderung eingestellt werden. Mit der Lochform lässt sich also die Feinheit der Verstellung in Abhängigkeit des Stellweges beeinflussen.

Ein erstes Element 100 weist strukturierte Öffnungen 105, 110 und 115 auf. Die Öffnungen sind regelmäßig auf dem planaren Element angeordnet sind. Beispielsweise sind sie im Wesentlichen in gleichem Abstand zueinander angeordent. Ein zweites Element 150 weist ebenso regelmäßig angeordnete Öffnungen 155, 160 und 165 auf. Im Fall von planaren Elementen können diese identisch sein, wobei das Element 150 gegenüber dem Element 100 um 180 Grad gewendet ist, das heißt gespiegelt ist. Bei dreidimensionalen Elementen ist es immerhin möglich das gleiche Stanzwerkzeug einzusetzen, um den Fertigungsaufwand zu minimieren. Um eine Korngröße eines Zerkleinerungsgutes zu verstellen, werden die Elemente 100 und 150 bevorzugt, übereinander angeordnet und gegeneinander verdreht. Durch die spezielle Ausgestaltung der Öffnungen 105, 110 und 115, sowie 155, 160 und 165 kann mithilfe eines vergleichsweise geringen Verdrehweges eine große Verstellwirkung erzielt werden.

Ein Teil der übereinanderliegenden Öffnungen der Elemente 100 und 150 ist in einer anderen Ansicht in Figur 10 gezeigt, das Detail 200 zeigt zum Einen eine Kontur 210 gestrichelt dargestellt des zweiten Elementes 150 und eine Kontur mit fortlaufender Linie dargestellt des ersten Elementes 100. Durch die spiegelsymmetrische Anordnung der Öffnungen der zwei Elemente ergeben sich in der Draufsicht kreisförmige Öffnungen. Mittels eines relativ geringen Verstellweges kann die Größe der Öffnung und somit des Durchlasses sowie die Korngröße des zerkleinerten Lebensmittels bequem eingestellt werden. Um eine zufällige Verstellung zu verhindern, können in analoger Weise, wie beim obigen Ausführungsbeispiel dargestellt, die beiden Elemente 100 und 150 gegen ein Verdrehen mithilfe von korrespondierenden Eingriffsmitteln abgesichert werden.

Durch Hilfe der Erfindung lassen sich Lebensmittel zuverlässig und reproduzierbar auf eine bestimmte Größe zerkleinern, wobei durch die Anordnung der Halterung des Lagers für das Zerkleinerungswerkzeug der Einsatz im Behälter entlastet wird und die Halterung des Lagers die Kräfte beim Zerkleinern aufnimmt, was den Vorteil hat, dass diese Halterung als austauschbares Verschleißteil ausgeführt werden kann. Dadurch die Lebensdauer der Vorrichtung erhöht und der Aufwand bei der Wartung erheblich reduziert wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Vorrichtung zum Zerkleinern von Lebensmitteln (1000) wenigstens aufweisend;
- einen Behälter (1),
- im Behälter (1) einen Einsatz mit Durchlass (4, 5) für zerkleinerte Lebensmittel;
- ein rotierendes Zerkleinerungswerkzeug (6, 7) zum Zerkleinern von Lebensmitteln,
- ein Lager (2) zur Lagerung des Zerkleinerungswerkzeuges (6, 7);
**dadurch gekennzeichnet, dass** das Lager (2) eine separate, am Rand des Behälters (1) gestützte, Halterung (3) aufweist.

2. Vorrichtung (1000) nach Anspruch 1, wobei das Lager (2) unterhalb des Einsatzes (4, 5) angeordnet ist.

3. Vorrichtung (1000) nach einem der obigen Ansprüche, wobei die Halterung 3 einen Ring aufweist.

4. Vorrichtung (1000) nach einem der vorangehenden Ansprüche, wobei die Halterung 3 auf einer Verjüngung des Behälters (1) aufliegt.

5. Vorrichtung (1000) nach einem der vorangehenden Ansprüche, wobei der Einsatz (2) zwei relativ zueinander bewegbare Elemente (4, 5; 100, 150) mit jeweils mindestens einem Loch (115, 165) aufweist, die zusammen den Durchlass bilden.

6. Vorrichtung (1000) (100) nach Anspruch 5, wobei das Loch (115, 165) eine unregelmäßige Struktur aufweist.

7. Vorrichtung (1000) nach Anspruch 6, wobei die Struktur (105) im ersten Element spiegelsymmetrisch zur Struktur (155) im zweiten Element ausgeführt ist.

8. Vorrichtung (1000) nach einem der Ansprüche 5 bis 7 bei der der Einsatz als Sieb (4, 5) ausgestaltet ist.

9. Vorrichtung (1000) nach Anspruch 8, bei der der Einsatz (4, 5) eine zentrale Öffnung für das Lager (2) aufweist.

10. Vorrichtung (1000) nach einem der Ansprüche 5 bis 9 bei dem die Elemente gegenseitig korrespondierende, lösbare Eingriffsmittel (8) aufweisen, um eine ungewollte Relativbewegung der Elemente gegeneinander zu verhindern.

## Claims

1. Device for chopping food (1000) at least comprising:
- a container (1),
- an insert comprising a through-passage (4, 5) for chopped food in the container (1);
- a rotating chopping tool (6, 7) for chopping food;
- a bearing (2) for bearing the chopping tool (6, 7);
**characterized in that**
the bearing (2) comprises a separate retainer (3) supported on the edge of the container (1).

2. Device (1000) according to claim 1, wherein the bearing (2) is arranged below the insert (4, 5).

3. Device (1000) according to one of the preceding claims, wherein the retainer (3) comprises a ring.

4. Device (1000) according to one of the preceding claims, wherein the retainer 3 bears against a tapered portion of the container (1).

5. Device (1000) according to one of the preceding claims, wherein the insert (2) comprises two elements (4, 5; 100, 150) which are movable relative to one another and which in each case have at least one hole (115, 165) which together form the through-passage.

6. Device (1000) according to claim 5, wherein the hole (115, 165) has an irregular structure.

7. Device (1000) according to claim 6, wherein the structure (105) in the first element is designed to be mirror-symmetrical with the structure (155) in the second element.

8. Device (1000) according to one of claims 5 to 7, wherein the insert is designed as a sieve (4, 5).

9. Device (1000) according to claim 8, wherein the insert (4, 5) comprises a central opening for the bearing (2).

10. Device (1000) according to one of claims 5 to 9, wherein the elements comprise releasable engagement means (8) which correspond to one another, in order to prevent an inadvertent movement of the elements relative to one another.

## Revendications

1. Dispositif de broyage d'aliments (1000) présentant au moins ;
- un récipient (1),
- dans le récipient (1), un insert avec passage (4, 5) pour aliments broyés ;
- un outil de broyage (6, 7) rotatif destiné à broyer des aliments,
- un palier (2) destiné à loger l'outil de broyage (6, 7) ;
**caractérisé en ce que**
le palier (2) présente un support (3) séparé, appuyé sur le bord du récipient (1).

2. Dispositif (1000) selon la revendication 1, le palier (2) étant disposé en dessous de l'insert (4, 5).

3. Dispositif (1000) selon l'une quelconque des revendications précédentes, le support (3) présentant une bague.

4. Dispositif (1000) selon l'une quelconque des revendications précédentes, le support (3) reposant sur un rétrécissement du récipient (1).

5. Dispositif (1000) selon l'une quelconque des revendications précédentes, l'insert (2) présentant deux éléments (4, 5 ; 100, 150) déplaçables l'un par rapport à l'autre, comprenant respectivement au moins un trou (115, 165), lesquels forment ensemble le passage.

6. Dispositif (1000) selon la revendication 5, le trou (115, 165) présentant une structure irrégulière.

7. Dispositif (1000) selon la revendication 6, la structure (105) dans le premier élément étant réalisée avec symétrie de miroir par rapport à la structure (155) dans le deuxième élément.

8. Dispositif (1000) selon l'une quelconque des revendications 5 à 7, dans lequel l'insert est conçu comme passoire (4, 5).

9. Dispositif (1000) selon la revendication 8, dans lequel l'insert (4, 5) présente une ouverture centrale pour le palier (2).

10. Dispositif (1000) selon l'une quelconque des revendications 5 à 9, dans lequel les éléments présentent des moyens de prise (8) détachables, correspondant de manière réciproque afin d'empêcher un mouvement relatif involontaire des éléments l'un contre l'autre.
